# EUROPEAN PATENT SPECIFICATION

(11) **EP 1 415 471 B1**
(45) Date of publication and mention of the grant of the patent: **07.09.2005**
(21) Application number: 01950714.4
(22) Date of filing: 29.06.2001
(51) Int. Cl.: H04N 7/16, H04N 7/167

(54) **METHOD AND APPARATUS FOR PERMITTING UNCONFIRMED VIEWING TIME WITH ADDRESSABLE PAY TV**
VERFAHREN UND GERÄT IN DEM NICHT- BESTÄTIGTE SCHAUZEIT IN EINEM ADRESSIERBAREN BEZAHLFERNSEHSYSTEM ERLAUBT IST
PROCEDE ET APPAREIL PERMETTANT UNE DUREE DE VISIONNEMENT NON CONFIRMEE AVEC UNE TELEVISION PAYANTE ADRESSABLE

(43) Date of publication of application: 06.05.2004
(73) Proprietor: Thomson Licensing S.A., 92648 Boulogne Cedex (FR)
(72) Inventor: DUFFIELD, David, Jay, Indianapolis, IN 46220 (US)
(74) Representative: Berthier, Karine
(86) International application number: PCT/US2001/020844
(87) International publication number: WO 2003/003740

(56) References cited:
- WO-A-98/43425
- WO-A-98/43428
- WO-A-99/07150

## Description

### FIELD OF THE INVENTION

This invention relates generally to conditional access systems, and more particularly to a system for providing conditional access to a received scrambled audio/visual (A/V) signal from a variety of sources, such as broadcast television networks, cable television networks, digital satellite systems, and internet service providers.

### BACKGROUND OF THE INVENTION

Today, a user may receive services from a variety of service providers, such as broadcast television networks, cable television networks, digital satellite systems, and internet service providers. Most television receivers are capable of receiving unscrambled information or programs directly from broadcast and cable networks. Cable networks providing scrambled (or encrypted) programs usually require a separate stand alone set-top box to descramble the program. Similarly, digital satellite systems usually provide scrambled programs that also require the use of a set-top box (STB). These set-top boxes may utilize a removable smart card which contains the keys necessary for recovering the descrambling keys.

Conditional access (CA) systems allow users access to certain programs offered by broadcasters, cable providers, internet service providers and digital satellite providers. In the case of cable and satellite providers, such programs (e.g., Home Box Office (HBO), Pay Per View channels, etc.) often have additional costs above the 'basic' cable or satellite costs. Typically, authorization for such programming is updated on a monthly basis depending upon whether the user has paid for such programming for the particular month. In the case of PPV or VOD, authorizations are typically done on a per request basis (i.e., authorization is given when the channel is requested).

The current method for updating a user's authorization to receive Pay TV programs is commonly referred to as 'homing.' In a homing process, a digital device such as a set-top box (STB), digital videocassette recorder (DVCR) or digital television (DTV) includes software which 'homes' or tunes to a particular channel in order to receive the authorization for the programming. Typically, this homing is done when the user is not operating the digital device (e.g., when the user is not watching television).

Typically, the authorization is accomplished through Entitlement Management Messages (EMMs) which are sent from the service provider (e.g., cable company) to the user's digital device. For example, if the service provider receives payment for HBO for the month of July, the service provider will send an EMM authorizing HBO to the particular user's digital device (e.g., set-top box) in the month of June. Typically, a smart card within the digital device receives the EMM and processes it to authorize HBO for the month of July. If the EMM is not received in June, the first time the user attempts to view HBO in July they will be informed (preferably by a message appearing on the television screen) that they are not authorized or subscribed to that channel.

In another exemplary EMM scheme, a smart card within the digital device has a set amount of money or credit stored thereon which is debited each time a channel is authorized for a particular month. Periodically, the service provider sends an EMM which restores the full credit value to the smart card. However, if the EMM is not received, the smart card may not have enough credit to authorize a particular channel (e.g., HBO) for a particular month. This scheme avoids the problem of updating all subscriber smart cards every month, but smart cards still need to be updated on some periodic basis, thus requiring homing by the digital device.

In most cases, EMMs are sent to the subscribers utilizing a 'carousel' system. Carousel systems repeatedly send EMMs to maximize the ability of the digital devices to receive the data. Each subscriber of the system has a separate EMM which authorizes his or her particular programs and services. Further, even if two or more users of the system subscribe to the same service package, their EMMs are different. Thus, if there are 10,000 subscribers of the system, the carousel must deliver 10,000 EMMs in a given cycle.

Because Pay TV systems can have very large subscriber bases, the carousel can take quite a while to send a particular EMM. For example, a given metropolitan regional service area (e.g., Indianapolis, IN) may possess the following characteristics:

| | |
|---|---|
| Approximate Number of People Served | 1.5 million |
| Approximate Number of Homes | 500,000 |
| Approximate Number of Users | 187,500 (30% of homes @ 1.25 STB per home) |
| EMM Carousel Data | 1.5*10⁸ bits (800 bits per user) |
| Carousel Time | 25minutes(1 Megabit/second) |

Thus, without using homing, a subscriber must watch HBO (or some other channel on which an EMM may be received) for at least 25 minutes in one month to be authorized to receive HBO for the next month.

To avoid this result, most modern digital devices (e.g., STBs) perform homing when the devices are not in use. However, the problem here is that the digital device must be continually powered up (even if not "on" or in operating mode) in order to receive the EMMs. Thus, a user must keep his digital device plugged in at all times, thereby increasing power demands and electricity costs.

For example, a digital device that is homing uses roughly 10-15 Watts of standby power. At an approximate rate of 10Watts per hour for 20 hours a day, and assuming power cost of 8 cents per kilowatt hour (KWh), homing costs the average subscriber approximately 1.6 cents per day, or $5.84 per year. This amount becomes even more significant when multiplied by the number of digital devices homing in a particular service area.

Additional problems exist with present homing techniques. For example, some televisions are virtually never turned off (e.g., televisions in a bar or hotel lobby), and thus will never have time to home. Additionally, smart cards must be left in the digital devices in order for the homing process to work. Certain subscribers may want to remove their smart card when they are not using the television to prevent children from purchasing programs or watching particular channels. Further, one conditional access system could attempt to 'block' another conditional access system by consuming all the available homing time. For example, if a given user subscribes to four (4) different conditional access systems, four different service providers will be attempting to send four different EMMs, and thus the digital device may have to choose between which one to receive (or 'home' to) first. Finally, digital devices with multiple slots for receiving smart cards must arbitrate between conditional access systems when they are in the 'off' mode. Therefore, it is clear that conventional conditional access systems consume too much time and energy for homing.

Thus, there is presently a need for a digital device that allows a user to have a specified unconfirmed viewing time in which to allow the digital device to perform homing.

### SUMMARY OF THE INVENTION

The present invention is a method for managing access to a signal representative of an event of a service provider by permitting a subscriber of the service provider to view an event for which the subscriber is not authorized for a specified time period; and transmitting at least one authorization code for the event to the subscriber during the specified time period.

More particularly, the invention relates, according to a first aspect; to a method for managing access to a signal representative of a channel of a service provider, said method being characterized by the steps of:
enabling an access device to process the signal and access,the channel which has an authorization code associated therewith, and for which the access device does not have the authorization code, for a specified time period independent of the signal's content; and
transmitting at least one authorization code for current authorization period to the access device during the specified time period, the at least one authorization code enabling the access device to continue accessing the channel beyond the specified time period.

According to specific characteristics of this method:
- the at least one authorization code comprises at least one entitlement management message;
- the step of transmitting further comprises: transmitting the at least one authorization code to a sinart card disposed in the access device;
- the specified time period is greater than or equal to a carousel rate of a data carousel which transmits the authorization code;
- the at least one authorization code comprises at least two authorization codes, said at least two authorization codes being provided on separate channels and both providing authorization for the channel;
- the access device previously had received an authorization code for a previous authorization period, but has not received an authorization code for the current authorization period, and the method further comprises the step of prohibiting the access device from accessing the event, if the at least one authorization code is not received during the specified viewing time period.

The invention further relates, according to a second aspect, to a system for managing access to a signal representative of a channel of a service provider, comprising:
a device having a smart card coupled thereto; and
means for transmitting authorization codes to the device,
characterized in that said device is enabled to process the signal and access the channel which has an authorization code associated therewith, and for which the device does not have the authorization code, for a specified time period independent of the signal's content; and
in that said transmitting means are able to transmit at least one authorization code for the current authorization period to the device during the specified time period, the at least one authorization code enabling the device to continue processing the signal and accessing the channel beyond the specified time period.

According to specific characteristics of this system:
- the digital device discontinues accessing the channel after expiration of the specified time period, unless an authorization code for the current authorization period is received by the digital device;
- the specified time period is greater than or equal to a carousel rate of a data carousel which transmits the authorization code.

The invention moreover relates, according to a third aspect, to a digital device, to be used in a conditional access system, for receiving a signal representative of a channel from at least one program service provider, characterized in that said digital device is enabled to process and access the channel which has an authorization code associated therewith, and for which the digital device does not have the authorization code, for a specified time period independent of the signal's content, the digital device having received a previous authorization code during a previous authorization period but having not received the authorization code for the current authorization period, the digital device including means for receiving the authorization code transmitted from the at least one program service provider, the digital device enabling continued processing and access of the channel beyond the specified time period in response to receiving the authorization code.

According to a specific characteristic of this device, the digital device discontinues processing and accessing the channel after expiration of the specified time period, unless an authorization code for said channel is received by the digital device.

The invention also relates, according to a fourth aspect of the invention, to a method for managing access to a signal representative of a channel of a service provider, said method being characterized by the steps of:
enabling an access device to process the signal and access the channel which has an authorization code associated therewith, and for which the access device does not have the authorization code, for a specified time period independent of the signal's content; and
receiving at least one authorization code for current authorization period in the access device during the specified time period, the at least one authorization code enabling the access device to continue accessing the channel beyond the specified time period.

According to a specific characteristics of this method, the enabling step comprises enabling the access device to process the signal and access the channel if the access device had previously received a previous authorization code associated with a previous authorization period.

### BRIEF DESCRIPTION OF THE DRAWINGS

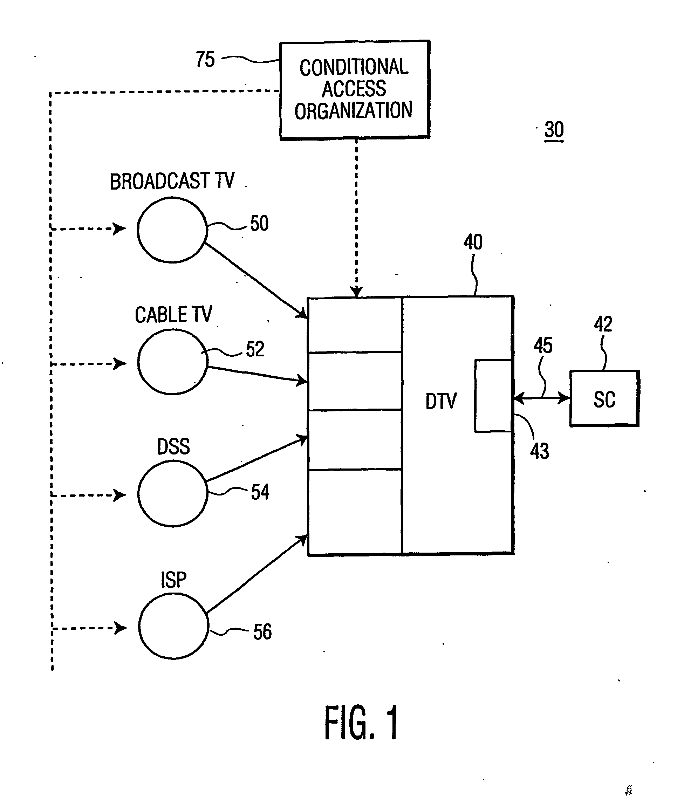

Figure 1 is a block diagram illustrating one architecture for interfacing a digital device, such as a digital television, with a variety of service providers.

### DETAILED DESCRIPTION

The present invention provides a conditional access system which may be utilized to obtain services from one of a plurality of sources (e.g., broadcast television networks, cable television networks, digital satellite systems, and internet service providers). The conditional access system when implemented within a digital device, such as a digital television (DTV), digital videocassette recorder (DVCR) or set-top box (STB), provides convenient management of the descrambling keys. For simplicity, the below description of the invention will be directed towards an implementation using a digital television and a smart card.

In Figure 1, system 30 depicts the general architecture for managing access to a digital television (DTV) 40. Smart Card (SC) 42 is inserted into, or coupled to, a smart card reader 43 of DTV 40; an internal bus 45 interconnects DTV 40 and SC 42 thereby permitting the transfer of data therebetween. Such smart cards include ISO 7816 cards having a card body with a plurality of terminals arranged on a surface in compliance with National Renewable Security Standard (NRSS) Part A or PCMCIA cards complying with NRSS Part B. Such smart cards also include ISO 7816 cards, PCMCIA cards, NRSS Part A and Part B cards, Open Cable Point of Deployment (POD) modules, Digital Video Broadcast (DVB) Common Interface (CI) modules and other proprietary designs known to those skilled in the art. Conceptually, when such a smart card is coupled to a smart card reader, the functionality of the smart card may be considered to be a part of the functionality of the device (e.g., DTV 40) thus removing the "boundaries" created by the physical card body of the smart card.

DTV 40 can receive services from a plurality of service providers (SPs), such as a broadcast television SP 50, a cable television SP 52, a satellite system SP 54, and an internet SP 56. Conditional Access Organization (CA) 75 is not directly connected to either the service providers or STB 40 but deals with key management and issues keys which may be used.

As explained above, the current method for updating a user's authorization to receive programs from the service providers is commonly referred to as 'homing.' In a homing process, a digital device, such as a DTV 40, includes software which 'homes' or tunes to a particular channel of the service provider in order to receive the authorization for the programming. Typically, this homing is done when the user is not operating the digital device (i.e., when the user is not watching television). As also described above, the authorization typically comes in the form of Entitlement Management Messages (EMMs) which are sent from the service provider (e.g., cable company) to the user's digital device (e.g., DTV 40) during the homing process.

According to a first exemplary embodiment of the present invention, the DTV 40 includes software that provides a message to a subscriber asking the subscriber if they would like to perform homing. For example, instead of requiring the DTV 40 to independently perform homing functions, the DTV includes software which displays a message towards the end of the authorization period (e.g., month) for a particular pay program (e.g., HBO), asking the subscriber if they would like to home and get their EMM for the next authorization period. Although the authorization period may sometimes be a month, it will be noted by those skilled in the art that the authorization period may be any length of time (e.g., second, hour, day, week etc.).

If the user selects to home at that time, the DTV 40 requests the new EMM from the service provider, and the EMM is received by the smart card 42 in the DTV shortly thereafter. Once the homing has been completed, the subscriber may be prompted with an optional additional message indicating that it is acceptable to turn off the DTV 40. Alternatively; the DTV 40 may turn itself off after the homing has been completed. The authorization message may be displayed at any time during the authorization period, but is preferably displayed towards the end of the authorization period, when the subscriber is either turning the DTV 40 on or off.

According to a second exemplary embodiment of the present invention, the smart card 42 includes software that provides the subscriber a set amount of unconfirmed viewing time before the Pay TV, PPV or VOD channel is disabled. Typically, the amount of unconfirmed viewing time should be slightly longer than the carousel rate of the EMM carousel. For example, in the Indianapolis area example given in the Background section of the present application, it will take approximately 25 minutes for a subscriber to receive his or her particular EMM if the subscriber tunes to the channel at a point in time immediately after the carousel has issued the EMM for the particular channel. Thus, if a provider were to set the unconfirmed viewing time to approximately 30 minutes, they would virtually ensure that the subscriber would receive their EMM.

It should be noted that the unconfirmed viewing time may comprise any time period acceptable to the service provider. Although a time period of 30 minutes may in some cases be ideal, time periods of anywhere from 1 second to 10 hours (and in some cases less than 1 second and more than 10 hours) may be utilized.

To put this scheme in perspective, consider the following example. Subscriber A paid for, but did not watch a pay channel (e.g., HBO) in a particular authorization time period (e.g., January), and therefore did not receive his EMM for the next authorization time period. In the next month or authorization time period (e.g., February), Subscriber A tunes to HBO, and although not technically authorized, is permitted to watch for a set unconfirmed viewing time period (e.g., 30 minutes). If the carousel rate is less than the unconfirmed viewing time period, Subscriber A will receive his EMM for February while he is watching.

Of course it is entirely possible that a subscriber will watch intermittently for short periods of time (i.e., periods of time less than the carousel rate), such that the EMM is never received. For example, using the above scenario, assume that Subscriber A again pays for, but does not watch HBO in January. Then, in February, Subscriber A watches HBO six (6) different times for only five (5) minutes each time. In such a scenario, Subscriber A has used up his unconfirmed viewing time (i.e., 6 * (5 minutes) = 30 minutes), but might not have received his EMM for February.

The likelihood of such a problem occurring can be significantly reduced or eliminated by either (a) increasing the unconfirmed viewing time, or (b) transmitting multiple EMMs on multiple channels (e.g., transmitting the EMMs for HBO on HBO, Showtime, Cinemax, Starz, etc.), thus increasing the chances that the subscriber will watch one of the channels for sufficient time to receive his EMM. The unconfirmed viewing time period may be increased to any limit acceptable to the service provider (e.g., 1 hour, 2 hours, 5 hours, etc.), and is not necessarily dependent upon the length of programs which may be viewed on the channel or channels to which the subscriber subscribes.

Although the invention has been described in terms of exemplary embodiments, it is not limited thereto.

## Claims

1. A method for managing access to a signal representative of a channel of a service provider (50, 52, 54, 56), said method being **characterized by** the steps of:
enabling an access device(40) to process the signal and access the channel which has an authorization code associated therewith, and for which the access device does not have the authorization code, for a specified time period independent of the signal's content; and
transmitting at least one authorization code for current authorization period to the access device (40) during the specified time period, the at least one authorization code enabling the access device to continue accessing the channel beyond the specified time period.

2. The method of claim 1 **characterized in that** said at least one authorization code comprises at least one entitlement management message.

3. The method according to one of claims 1 or 2, **characterized in that** said step of transmitting further comprises: transmitting the at least one authorization code to a smart card (42) disposed in the access device (40).

4. The method according to one of claims 1 to 3, **characterized in that** said specified time period is greater than or equal to a carousel rate of a data carousel which transmits the authorization code.

5. The method according to one of claims 1 to 4, **characterized in that** said at least one authorization code comprises at least two authorization codes, said at least two authorization codes being provided on separate channels and both providing authorization for the channel.

6. The method of claim 1, **characterized in that**
the access device (40) previously had received an authorization code for a previous authorization period, but has not received an authorization code for the current authorization period, and further comprising the step of
prohibiting the access device from accessing the event, if the at least one authorization code is not received during the specified viewing time period.

7. A system for managing access to a signal representative of a channel of a service provider (50, 52, 54, 56), comprising:
a device (40) having a smart card (42) coupled thereto; and
means for transmitting authorization codes to the device,
**characterized in that** said device is enabled to process the signal and access the channel which has an authorization code associated therewith, and for which the device does not have the authorization code, for a specified time period independent of the signal's content; and
**in that** said transmitting means are able to transmit at least one authorization code for the current authorization period to the device during the specified time period, the at least one authorization code enabling the device to continue processing the signal and accessing the channel beyond the specified time period.

8. The system of claim 7, **characterized in that** the digital device discontinues accessing the channel after expiration of the specified time period, unless an authorization code for the current authorization period is received by the digital device.

9. The system according to one of claims 7 or 8, **characterized in that** said specified time period is greater than or equal to a carousel rate of a data carousel which transmits the authorization code.

10. A digital device (40), to be used in a conditional access system, for receiving a signal representative of a channel from at least one program service provider, **characterized in that**
said digital device is enabled to process and access the channel which has an authorization code associated therewith, and for which the digital device does not have the authorization code, for a specified time period independent of the signal's content, the digital device having received a previous authorization code during a previous authorization period but having not received the authorization code for the current authorization period,
the digital device including means for receiving the authorization code transmitted from the at least one program service provider, the digital device enabling continued processing and access of the channel beyond the specified time period in response to receiving the authorization code.

11. The digital device of claim 10, **characterized in that** said digital device discontinues processing and accessing the channel after expiration of the specified time period, unless an authorization code for said channel is received by the digital device.

12. A method for managing access to a signal representative of a channel of a service provider, said method being **characterized by** the steps of:
enabling an access device to process the signal and access the channel which has an authorization code associated therewith, and for which the access device does not have the authorization code, for a specified time period independent of the signal's content; and
receiving at least one authorization code for current authorization period in the access device during the specified time period, the at least one authorization code enabling the access device to continue accessing the channel beyond the specified time period.

13. The method of claim 12, **characterized in that** the enabling step comprises enabling the access device to process the signal and access the channel if the access device had previously received a previous authorization code associated with a previous authorization period.

## Patentansprüche

1. Verfahren zur Verwaltung des Zugriffs zu einem Signal für einen Kanal eines Serviceanbieters (50, 52, 54, 56), **gekennzeichnet durch** folgende Schritte:
Ermöglichung eines Zugriffsgeräts (40) zur Verarbeitung des Signals und zum Zugriff zu dem Kanal, der einen Berechtigungscode dafür enthält und für den das Zugriffsgerät keinen Berechtigungscode hat, für eine bestimmte Zeitperiode unabhängig von dem Inhalt des Signals, und
Übertragung wenigstens eines Berechtigungscodes für die laufende Berechtigungsperiode zu dem Zugriffsgerät (40) während der bestimmten Zeitperiode, wobei der wenigstens eine Berechtigungscode ermöglicht, dass das Zugriffsgerät weiterhin einen Zugriff zu dem Kanal über die bestimmte Zeitperiode hinaus hat.

2. Verfahren nach Anspruch 1, **dadurch gekennzeichnet, dass** der wenigstens eine Berechtigungscode wenigstens eine Berechtigungs-Verwaltungs-Nachricht enthält.

3. Verfahren nach einem der Ansprüche 1 oder 2, **dadurch gekennzeichnet, dass** der Schritt der Übertragung außerdem enthält: Übertragung des wenigstens einen Berechtigungscodes zu einer Smart Card (42) in dem Zugriffsgerät (40).

4. Verfahren nach einem der Ansprüche 1 bis 3, **dadurch gekennzeichnet, dass** die bestimmte Zeitperiode größer oder gleich einer Karussellrate eines Datenkarussells ist, das den Berechtigungsode überträgt.

5. Verfahren nach einem der Ansprüche 1 bis 4, **dadurch gekennzeichnet, dass** der wenigstens eine Berechtigungscode wenigstens zwei Berechtigungscodes enthält, und die wenigstens zwei Berechtigungscodes auf getrennten Kanälen geliefert werden und beide die Berechtigung für den Kanal bilden.

6. Verfahren nach Anspruch 1, **dadurch gekennzeichnet, dass** das Zugriffsgerät (40) vorher einen Berechtigungscode für eine vorangehende Berechtigungsperiode empfangen hat, jedoch noch keinen Berechtigungscode für die laufende Berechtigungsperiode empfangen hat, und ferner mit dem Schritt der
Verhinderung des Zugriffsgeräts von dem Zugriff zu einem Ereignis, wenn der wenigstens eine Berechtigungscode während der bestimmten Betrachtungszeitperiode nicht empfangen worden ist.

7. System zur Verwaltung des Zugriffs zu einem Signal, das einen Kanal eines Serviceanbieters (50, 52, 54, 56) enthält mit:
einem Gerät (40) mit einer damit verbundenen Smart Card (42) und
Mitteln zur Übertragung der Berechtigungscodes zu dem Gerät,
**dadurch gekennzeichnet, dass** das Gerät in der Lage ist, zur Verarbeitung des Signals und zum Zugriff zu dem Kanal, dem ein Berechtigungscode zugeordnet ist und für den das Gerät keinen Berechtigungscode besitzt, für eine bestimmte Zeitperiode, unabhängig von dem Inhalt des Signals und
dass die Übertragungsmittel geeignet sind, zum Übertragen des wenigstens einen Berechtigungscods für die laufende Berechtigungsperiode zu dem Gerät während einer bestimmten Zeitperiode zu übertragen, und der wenigstens eine Berechtigungscode das Gerät befähigt, die Verarbeitung des Signals und den Zugriff zu dem Kanal über die bestimmte Zeitperiode hinaus zu ermöglichen.

8. System nach Anspruch 1, **dadurch gekennzeichnet, dass** das digitale Gerät den Zugriff zu dem Kanal nach dem Ablauf der bestimmten Zeitperiode abbricht, wenn kein Berechtigungscode für die laufende Berechtigungsperiode durch das digitale Gerät empfangen wird.

9. System nach einem der Ansprüche 7 oder 8, **dadurch gekennzeichnet, dass** die bestimmte Zeitperiode größer oder gleich einer Karussellrate eines Datenkarussells ist, das den Berechtigungscode überträgt.

10. Digitales Gerät (40) zur Anwendung in einem System für einen bedingten Zugriff zum Empfang eines Signals für einen Kanal von wenigstens einem Programmserviceanbieter, **dadurch gekennzeichnet, dass**
das digitale Gerät befähigt ist zur Verarbeitung und zum Zugriff zu dem Kanal, dem ein Berechtigungscode zugeordnet ist und für den das digitale Gerät keinen Berechtigungscode enthält, für eine bestimmte Zeitperiode, unabhängig von dem Inhalt des Signals, dass das digitale Gerät einen vorangehenden Berechtigungscode enthält, während einer vorangehenden Berechtigungsperiode, jedoch keinen Berechtigungscode für die laufende Berechtigungsperiode empfangen hat,
das digitale Gerät Mittel enthält zum Empfang des Berechtigungscodes, dass von dem wenigstens einem Programmserviceanbieter übertragen wird, und das digitale Gerät die weitere Verarbeitung und den Zugriff zu dem Kanal über die vorbestimmte Zeitperiode hinaus aufgrund des Empfangs des Berechtigungscodes ermöglicht.

11. Digitales Gerät nach Anspruch 10, **dadurch gekennzeichnet, dass** das digitale Gerät die Verarbeitung und den Zugriff zu dem Kanal nach dem Ablauf der bestimmten Zeitperiode abbricht, wenn kein Berechtigungscode für diesen Kanal durch das digitale Gerät empfangen worden ist.

12. Verfahren zur Verwaltung des Zugriffs zu einem Signal für einen Kanal eines Serviceanbieters, **gekennzeichnet durch** die folgenden Schritte:
Ermöglichung eines Zugriffsgerät zur Verarbeitung des Signals und zum Zugriff zu dem Kanal, der einen zugeordneten Berechtigungscode enthält und für den das Zugriffsgerät keinen Berechtigungscode für eine bestimmte Zeitperiode enthält, unabhängig von dem Inhalt des Signals und
Empfang wenigstens eines Berechtigungscodes für die laufende Berechtigungsperiode zu dem Zugriffsgerät während der bestimmten Zeitperiode, wobei der wenigstens eine Berechtigungscode ermöglicht, dass das Zugriffsgerät weiterhin einen Zugriff zu dem Kanal über die bestimmte Zeitperiode hinaus hat.

13. Verfahren nach Anspruch 12, **dadurch gekennzeichnet, dass** der Schritt zur Ermöglichung die Ermöglichung des Zugriffsgeräts zur Verarbeitung des Signals und zum Zugriff zu dem Kanal enthält, wenn das Zugriffsgerät vorher einen vorangehenden Berechtigungscode für eine vorangehende Berechtigungsperiode empfangen hat.

## Revendications

1. Procédé de gestion d'accès à un signal représentatif d'un canal d'un fournisseur de services (50, 52, 54, 56), ledit procédé étant **caractérisé par** les étapes consistant à :
permettre à un dispositif d'accès (40) de traiter le signal et d'accéder au canal auquel est associé un code d'autorisation et pour lequel le dispositif d'accès n'a pas le code d'autorisation, pour une durée spécifiée indépendante du contenu du signal ; et
transmettre au moins un code d'autorisation pour la période d'autorisation actuelle au dispositif d'accès (40) pendant la durée spécifiée, ce code d'autorisation permettant au dispositif d'accès de continuer à accéder au canal au-delà de la durée spécifiée.

2. Procédé selon la revendication 1, **caractérisé en ce que** ledit code d'autorisation comporte au moins un message de gestion des droits.

3. Procédé selon l'une des revendications 1 ou 2, **caractérisé en ce que** l'étape de transmission comporte en outre : la transmission du au moins un code d'autorisation vers une carte à puce (42) placée dans le dispositif d'accès (40).

4. Procédé selon l'une des revendications 1 à 3, **caractérisé en ce que** ladite durée spécifiée est supérieure ou égale à la période d'un carrousel de données qui émet le code d'autorisation.

5. Procédé selon l'une des revendications 1 à 4, **caractérisé en ce que** ledit code d'autorisation comporte au moins deux codes d'autorisation, lesdits au moins deux codes d'autorisation étant fournis sur des canaux séparés et les deux fournissant l'autorisation d'accès au canal.

6. Procédé selon la revendication 1, **caractérisé en ce que**
le dispositif d'accès (40) a précédemment reçu un code d'autorisation pour une période d'autorisation précédente, mais n'a pas reçu de code d'autorisation pour la période d'autorisation actuelle , et comporte en outre l'étape consistant à
empêcher le dispositif d'accès d'accéder à l'évènement si le au moins un code d'autorisation n'est pas reçu pendant la durée de visualisation spécifiée.

7. Système de gestion d'accès à un signal représentatif d'un canal d'un fournisseur de services (50, 52, 54, 56) comportant les éléments suivants:
un dispositif relié à une carte à puce (42) ; et
des moyens d'émission de codes d'autorisation vers le dispositif,
**caractérisé en ce que** ledit dispositif est autorisé à traiter le signal et à accéder au canal auquel est associé un code d'autorisation, et pour lequel le dispositif n'a pas le code d'autorisation, pour une durée spécifiée indépendante du contenu du signal ; et
**en ce que** ce lesdits moyens d'émission sont capables de transmettre au moins un code d'autorisation pour la période d'autorisation actuelle vers le dispositif pendant la durée spécifiée, le au moins un code d'autorisation permettant au dispositif de continuer à traiter le signal et d'accéder au canal au-delà de la durée spécifiée.

8. Système selon la revendication 7, **caractérisé en ce que** le dispositif numérique cesse d'accéder au canal après l'expiration de la durée spécifiée, à moins qu'un code d'autorisation pour la période d'autorisation actuelle ne soit reçu par le dispositif numérique.

9. Système selon l'une des revendications 7 ou 8, **caractérisé en ce que** ladite durée spécifiée est supérieure ou égale à la période d'un carrousel de données qui émet le code d'autorisation.

10. Dispositif numérique (40) destiné à être utilisé dans un système à accès conditionnel, pour recevoir un signal représentatif d'un canal provenant d'au moins un fournisseur de programme, **caractérisé en ce que**
ledit dispositif numérique est autorisé à traiter le canal et à accéder au canal auquel est associé un code d'autorisation, et pour lequel le dispositif numérique n'a pas le code d'autorisation, pour une durée spécifiée indépendante du contenu du signal, le dispositif numérique ayant reçu un code d'autorisation précédent pendant une durée d'autorisation précédente mais n'ayant pas reçu le code d'autorisation pour la période d'autorisation actuelle,
le dispositif numérique comprenant des moyens de réception du code d'autorisation provenant du au moins un fournisseur de programmes, le dispositif numérique permettant le traitement et l'accès prolongés au canal au-delà de la durée spécifiée en réponse à la réception du code d'autorisation.

11. Dispositif numérique selon la revendication 10, **caractérisé en ce que** ledit dispositif numérique cesse le traitement et l'accès au canal après expiration de la durée spécifiée, à moins qu'un code d'autorisation pour ledit canal ne soit reçu par le dispositif numérique.

12. Procédé de gestion de l'accès à un signal représentatif d'un canal de fournisseur de services, ledit procédé étant **caractérisé par** les étapes consistant à :
permettre à un dispositif d'accès de traiter le signal et d'accéder au canal auquel est associé un code d'autorisation et pour lequel le dispositif d'accès n'a pas le code d'autorisation pour une durée spécifiée indépendante du contenu du signal ; et
recevoir au moins un code d'autorisation pour la période d'autorisation actuelle dans le dispositif d'accès pendant la durée spécifiée, ce code d'autorisation permettant au dispositif d'accès de continuer à accéder au canal au-delà de la durée spécifiée.

13. Procédé selon la revendication 12, **caractérisé en ce que** l'étape de permission comporte le fait de permettre au dispositif d'accès de traiter le signal et d'accéder au canal si le dispositif d'accès a précédemment reçu un code d'autorisation précédent associé à une période d'autorisation précédente.
